# EUROPÄISCHE PATENTANMELDUNG

(11) **EP 2 586 593 A1**
(43) Veröffentlichungstag der Anmeldung: **01.05.2013**
(21) Anmeldenummer: 12186928.3
(22) Anmeldetag: 02.10.2012
(51) Int. Cl.: B29C 65/06, B29C 65/58, F16B 5/06, B29C 65/76

(54) **Lösbare Rastverbindung zweier Bauteile**

(30) Priorität: 28.10.2011 DE 102011054923
(71) Anmelder: EJOT GmbH & Co. KG, 57319 Bad Berleburg (DE)
(72) Erfinder: Kittel, Dieter, 57334 Bad Laasphe (DE)
(74) Vertreter: Bardehle, Heinz

(57) **Zusammenfassung**

Die Erfindung betrifft eine lösbare Rastverbindung zweier Halterungsteile (1, 2) mit einem eine Erweiterung aufweisenden Rastbolzen (3) in dem einen Halterungsteil (1) und einer elastischen Rastaufnahme (9) in dem anderen Halterungsteil (2) zur Aufnahme in Trägem (7, 8) aus porösem Kunststoff. Die Erfindung zeichnet sich dadurch aus, dass die Halterungsteile (1, 2) äußerlich wannenartig mit einem Boden (11, 12) und daran ansetzenden schrägen Wänden (13,14) gleichartig gestaltet sind, die zur Öffnung hin derart schräg verlaufen, dass sie jeweils eine vom Boden (11,12) her sich verbreiternde Wanne bilden, die im Bereich ihrer Außenfläche als Reiboberfläche gegenüber den Trägern (7, 8) dient und in diesen durch Reibschweißen derart verankerbar sind, dass der Boden (11, 12) in dem Träger versenkt ist.

## Beschreibung

Die Erfindung bezieht sich auf eine lösbare Rastverbindung zweier Bauteile mit einem eine Erweiterung aufweisenden Rastbolzen in dem einen Bauteil und einer elastischen Rastaufnahme in dem anderen Bauteil.

Eine als Steckkupplung bezeichnete Rastverbindung ist in der EP 0902198 B1 dargestellt und beschrieben. Sie enthält ein erstes Bauteil, das ein elastisch verformbares Einsatzteil enthält, wobei das Einsatzteil in einer Fassung des ersten Bauteils formschlüssig gehalten ist. Das zweite Bauteil weist einen mit einem kugelförmigen Kopf versehenen Vorsprung auf, der in eine das elastisch verformbare Einzelteil bildende Kugelpfanne zur Schaffung einer Schnappverbindung einsetzbar ist. Das zweite Bauteil mit dem kugelförmigen Kopf besitzt einen Gewindebolzen, der in das zweite Bauteil eingeschraubt ist. Zum zweiten Bauteil gehört damit der kugelförmige Kopf und über den Gewindebolzen ein Mutterteil als Bestandteil des zweiten Bauteils. Das erste Bauteil mit der Kugelpfanne ist Bestandteil einer Abdeckhaube, die auf das zweite Bauteil absenkbar ist, wobei der kugelförmige Kopf des zweiten Bauteils in die Kugelpfanne des ersten Bauteils einrasten kann. Die Befestigung der Kugelpfanne an der Abdeckhaube erfolgt formschlüssig durch eine Rastverbindung zwischen einer von der Abdeckhaube wegragenden, die Kugelpfanne umfassenden Wand, in die die Kugelpfanne einrastet. Diese Verbindung wird also durch eine übliche einrastende Steckverbindung gebildet.

Der Erfindung liegt die Aufgabe zugrunde, die beiden Bauteile einer lösbaren Rastverbindung jeweils für sich in einem Konstruktionsteil sicher unterzubringen, die jeweils aus einem porösem Kunststoff besteht, in dem die beiden Bauteile in Gegenüberstellung einzusetzen sind. Nach Einsetzen der beiden Bauteile sollen sich dann die beiden Trägerteile zusammendrücken und wieder auseinanderziehen lassen, wobei eine lösbare Verrasterung die beiden Bauteile zusammenhält.

Gemäß der Erfindung geschieht dies durch eine Konstruktion, bei der die Halterungsteile äußerlich wannenartig mit einem Boden und daran ansetzenden schrägen Wänden gleichartig gestaltet sind, die zur Öffnung hin derart schräg verlaufen, dass sie jeweils eine vom Boden her sich verbreiternde Wanne bilden, die im Bereich ihrer Außenfläche als Reiboberfläche gegenüber den Trägem dient und in diesen durch Reibschweißen derart verankerbar sind, dass der Boden in dem Träger versenkt ist.

Aufgrund der gleichartigen Gestaltung der Halterungsteile in den Trägern ergeben sich gleichartige Verhältnisse in den porösen Kunststoff der Träger, wobei für die Verankerung der beiden Halterungsteile die gleichen Kräfte wirksam werden und das Einbringen der Halterungsteile in die Träger mit dem gleichen Werkzeug und Verfahrensaufwand herbeigeführt werden kann. Dies stellt eine wesentliche Erleichterung der Anbringung der Halterungsteile dar, die außerdem durch ihre äußerliche Gestaltung auf ihrer dem anderen Halterungsteil zugewandten Seite für das Zusammenfügen der beiden Halterungsteile auch einen hilfreichen Richtungshinweis geben, so dass sich mit der erfindungsgemäßen Gestaltung der lösbaren Rastverbindung eine für die Praxis ganz besonders günstig handhabbare Gestaltung ergibt, da beim Zusammenfügen der beiden Halterungsteile zum Einklinken der Rastverbindung auch die aus dem Kunststoffträger sichtbare Umfassung der jeweiligen Wanne gewissermaßen aufeinander gezielt zubewegt werden können, um das Einrasten der Rastverbindung herbeizuführen.

Als Material für die Träger aus porösem Kunststoff verwendet man zweckmäßig Schaumstoff oder auch ein Material für ein Kunststoff-Leichtbauteil.

Für das den Rastbolzen aufweisende Halterungsteil verwendet man zweckmäßig einen harten Werkstoff, zum Beispiel harten Kunststoff, mit aus der Öffnung des Halterungsteils heraustretendem Rastbolzen, der nach Einsetzen des betreffenden Halterungsteils in seinen Träger aus diesem heraussteht und damit gewissermaßen die Richtung für das Anbringen des anderen Halterungsteils vorgibt. Die zugehörige Rastaufnahme in dem anderen Halterungsteil ist dann derart versenkt, dass bei Zusammenfügung der beiden Halterungsteile diese mit den Rändern ihrer Öffnung aneinander anliegen.

Die Rastaufnahme wird zweckmäßig zu Einzelsegmenten geschlitzt, die bei Zusammenführung der beiden Bauteile den Rastbolzen umschließen. Die einzelnen Segmente entwickeln damit eine gewisse Federspannung in Richtung auf den Rastbolzen, wodurch dieser sicher in der Rastaufnahme gehalten wird.

Die Rastaufnahme kann man auch aus einem elastischen Werkstoff mit einer dem Rastbolzen angepassten Ausnehmung gestalten, die bei Zusammenfügung der beiden Bauteile den Rastbolzen einspannend umschließt. Hierfür kommt zum Beispiel ein gummiartiges Material für die Rastaufnahme in Frage, das sich beim Eindrücken der Erweiterung des Rastbolzens entsprechend ausdehnt und bei vollständig zusammengefügten Halterungsteilen sich hinter den eingerücktem Rastbolzen wieder schließt.

In den Figuren sind Ausführungsbeispiele der Erfindung dargestellt. Es zeigen;
- Fig. 1: die zusammengesetzte Rastverbindung;
- Fig. 2a und Fig. 2b: die Bestandteile der Rastverbindung, nämlich in;

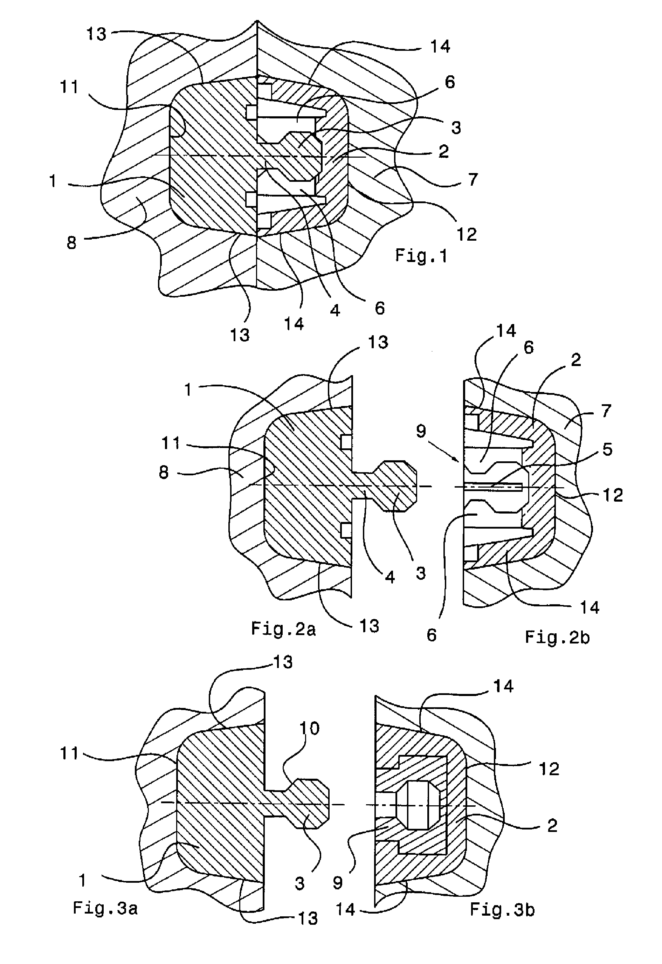

- Fig. 2a: das Halterungsteil mit einem Rastbolzen;
- Fig. 2b: das dazugehörige Halterungsteil mit geschlitzter Rastaufnahme und
- Fig. 3a und Fig. 3b: die beiden Teile einer Rastverbindung, bei der das Festhalten des Rastbolzens mittels einer aus elastischem Werkstoff bestehenden Rastaufnahme erfolgt.

In der Fig. 1 ist die zusammengesetzte Rastverbindung mit dem Halterungsteil 1 und dem Halterungsteil 2 dargestellt, wobei das Halterungsteil 1 mit dem Rastbolzen 3 versehen ist, der über den Hals 4 aus der Masse des Halterungsteils 1 herausragt und mit diesem einstückig verbunden ist. Der erweiterte Kopf des Rastbolzens 3 wird von Federzungen 6 eingeklemmt, die aus der Masse des zweiten Halterungsteils 2 herausragen. Die einzelnen Federzungen 6 sind durch Schlitze voneinander getrennt, so dass sie bei Einführung des Kopfes des Rastbolzens 3 radial nach außen wegfedern können und bei voll eingesetztem Halterungsteil 1 den Kopf des Bolzens 3 satt umschließen. Bei dieser federnd lösbaren Rastverbindung handelt es sich um eine bekannte Gestaltung, wie sie auch aus der Fig. 10 der oben erwähnten EP 0902198 B1 ersichtlich ist.

Die beiden Halterungsteile 1 und 2 liegen mit ihrer dem jeweils anderen Halterungsteil zugewandten Seite satt aneinander an. Sie schließen mit ihrer dem anderen Halterungsteil zugewandten Außenfläche glatt ab, die sich im zusammengesetzten Zustand an die entsprechende Halterungsfläche des anderen Halterungsteils anschmiegt, womit eine Verbindung der beiden Trägerteile 7 und 8 herbeigeführt ist, die durch die Verrasterung der beiden Halterungsteile 1 und 2 fest zusammengehalten werden, wie dies in der Fig. 1 deutlich gezeigt ist. Die beiden Halterungsteile 1 und 2 weisen jeweils den Boden 11 und 12 sowie die schrägen Wände 13 und 14 auf.

Die beiden wesentlichen Einzelteile der lösbaren Rastverbindung gemäß Fig. 1 sind in den Fig. 2a und 2b im Einzelnen dargestellt, wobei Fig. 2a das in den Träger 8 eingesetzte Halterungsteil 1 zeigt und Fig. 2b das in den Träger 7 eingesetzte Halterungsteil 2 mit dem Schlitz 5. Aus dieser in den Fig. 2a und 2b hervorgehenden gegenseitigen Lage der beiden Halterungsteile 1 und 2 lässt sich dann durch Zusammenschieben dieser beiden Halterungsteile in die in Fig.1 dargestellte Lage eine sichere Verrasterung der beiden Trägerteile 7 und 8 herbeiführen.

Die Fig. 3a und 3b zeigen eine Abwandlung der Gestaltung gemäß Fig. 2a und 2b, die darin besteht, dass an Stelle der Federzungen 6 zur Halterung des Kopfes des Rastbolzens 3 ein elastisches Bauteil 9 vorgesehen ist, das gummiartig den Kopf des Rastbolzens 3 umschließt und sich dabei hinter den Hinterschnitt 10 des Kopfes des Rastbolzens 3 setzt, womit dieser festgehalten wird und nur dann aus der elastischen Rastaufnahme 9 gemäß Fig. 3b herausgezogen werden kann, wenn durch die Kräfte des Auseinanderziehens der beiden Halterungsteile 1 und 2 die elastische Rastaufnahme 9 gedehnt wird und den Kopf des Rastbolzens 3 herausgleiten lässt.

### Bezugszeichenliste

- 1: Halterungsteil
- 2: Halterungsteil
- 3: Rastbolzen
- 4: Hals
- 5: Schlitz
- 6: Federzungen
- 7: Träger
- 8: Träger
- 9: Rastaufnahme
- 10: Hinterschnitt
- 11: Boden
- 12: Boden
- 13: Wand
- 14: Wand

## Patentansprüche

1. Lösbare Rastverbindung zweier Halterungsteile (1, 2) mit einem eine Erweiterung aufweisenden Rastbolzen (3) in dem einen Halterungsteil (1) und einer elastischen Rastaufnahme (9) in dem anderen Halterungsteil (2) zur Aufnahme in Trägem (7, 8) aus porösem Kunststoff, **dadurch gekennzeichnet, dass** die Halterungsteile (1, 2) äußerlich wannenartig mit einem Boden (11,12) und daran ansetzenden schrägen Wänden (13, 14) gleichartig gestaltet sind, die zur Öffnung hin derart schräg verlaufen, dass sie jeweils eine vom Boden (11, 12) her sich verbreiternde Wanne bilden, die im Bereich ihrer Außenfläche als Reiboberfläche gegenüber den Trägern (7, 8) dient und in diesen durch Reibschweißen derart verankerbar sind, dass der Boden (11, 12) in dem Träger versenkt ist.

2. Lösbare Rastverbindung nach Anspruch 1, **dadurch gekennzeichnet, dass** der Träger (7,8) aus Schaumstoff besteht.

3. Lösbare Rastverbindung nach Anspruch 1, **dadurch gekennzeichnet, dass** der Träger (7,8) aus einem Kunststoff-Leichtbauteil besteht.

4. Lösbare Rastverbindung nach einem der Ansprüche 1-3, **dadurch gekennzeichnet, dass** das den Rastbolzen (3) aufweisende Halterungsteil (1) aus einem harten Werkstoff, insbesondere Kunststoff, mit aus der Öffnung des Halterungsteils (1) heraustretendem Rastbolzen (3) gestaltet ist und die Rastaufnahme (9) in dem anderen Halterungsteil (2) derart versenkt ist, dass bei Zusammenfügung der beiden Halterungsteile (1, 2) diese mit den Rändern ihrer Öffnung aneinander anliegen.

5. Lösbare Rastverbindung nach einem der Ansprüche 1-4, **dadurch gekennzeichnet, dass** die Rastaufnahme (9) zu Federzungen (6) geschlitzt ist, die bei Zusammenfügung der beiden Bauteile den Rastbolzen (3) umschließen.

6. Lösbare Rastverbindung nach einem der Ansprüche 1-4, **dadurch gekennzeichnet, dass** die Rastaufnahme (9) aus einem elastischen Werkstoff mit einer dem Rastbolzen (3) angepassten Ausnehmung versehen ist, die bei Zusammenfügung der beiden Halterungsteile (1, 2) den Rastbolzen (3) einspannend umschließt.
